# EUROPEAN PATENT APPLICATION

(11) **EP 4 567 418 A1**
(43) Date of publication of application: **11.06.2025**
(21) Application number: 23850203.3
(22) Date of filing: 11.05.2023
(51) Int. Cl.: G01N 29/04, G01N 29/24, G01N 29/34, G01N 29/36

(54) **ULTRASONIC INSPECTION DEVICE USING UPPER PROBE MODULE AND LOWER PROBE MODULE**

(30) Priority: 03.08.2022 KR 20220096751
(71) Applicant: ViewOn Co., Ltd., Seoul 08507 (KR)
(72) Inventor: YOON, Young Wook, Seongnam-si, Gyeonggi-do 13540 (KR); YOON, Young Yeop, Pyeongtaek-si, Gyeonggi-do 17857 (KR); BYOUN, Ki Jun, Seoul 08236 (KR)
(74) Representative: Lavoix
(86) International application number: PCT/KR2023/006426
(87) International publication number: WO 2024/029692

(57) **Abstract**

The present disclosure relates to an ultrasonic inspection apparatus using an upper probe module and a lower probe module, including: a lower probe module including a lower transducer and a lower water jacket; an upper probe module that is arranged above a target object and includes an upper transducer and an upper water jacket; and a trigger control unit configured to control a time point at which the lower transducer generates ultrasonic waves, and a time point at which the upper transducer generates ultrasonic waves, wherein the liquid, which is a transmission medium for ultrasonic transmission, is sprayed onto the target object from the lower water jacket and the upper water jacket without immersing the target object in the liquid.

## Description

### Technical Field

The present disclosure relates to an ultrasonic inspection apparatus using an upper probe module and a lower probe module, and more particularly, to an ultrasonic inspection apparatus using an upper probe module and a lower probe module, which is capable of inspecting a target object by using the upper probe module and the lower probe module that are configured to generate ultrasonic waves toward the target object from above and below the target object, respectively, so as to simultaneously inspect upper and lower portions of the target object.

### Background Art

Ultrasonic inspection apparatuses are for irradiating a target object with ultrasonic waves through a probe module and receiving reflected or transmitted ultrasonic waves with the probe module to visualize them. Ultrasonic inspection apparatuses are able to detect minute defects, and thus require high resolution.

Ultrasonic inspection methods using ultrasonic inspection apparatuses require a transmission medium for transmitting ultrasonic waves. Liquid is used as an ultrasonic transmission medium to prevent attenuation of ultrasonic waves, and water is generally used as such liquid.

In related-art ultrasonic inspection methods, a reservoir is filled with water, a product is placed in the water, and then a probe module is positioned above a target object. An inspection may be performed while the target object is partially submerged in the water.

However, related-art ultrasonic inspection apparatuses including a probe module to be positioned above a target object has the following issues. In related-art ultrasonic inspection apparatuses, a probe module configured to emit ultrasonic waves and receive reflected signals is arranged only on one side of a target object, for example, above the target object.

In related-art ultrasonic inspection apparatuses, the probe module is arranged above a target object, an inspection is performed from above the target object. However, in cases in which a target object requires inspection of both of upper and lower portions, performing an inspection only from above necessitates inverting and moving the target object to performing scanning of the lower portion after scanning of the upper portion.

As described above, when an inspection is performed by using an ultrasonic inspection apparatus including a probe module positioned only on a target object, there is an issue in that inverting and moving the target object increases the process time. In addition, after scanning an upper portion of the target object, when performing alignment according to the inversion and movement of the target object, there is an issue in that it is infeasible to process pieces of signal processing data obtained by scanning the upper and lower portions of the target object in conjunction with each other due to the occurrence of positional alignment tolerance.

In addition, when bubbles are mixed in water, which is an ultrasonic transmission medium of the ultrasonic inspection apparatus, attenuation of ultrasonic waves may occur due to the bubbles. However, related-art ultrasonic inspection apparatuses have an issue in that they do not include a separate device for removing bubbles from water supplied as a transmission medium.

### Disclosure of Invention

### Technical Problem

The present disclosure is intended to solve the above-described problem, and more particularly, relates to an ultrasonic inspection apparatus using an upper probe module and a lower probe module, which is capable of inspecting a target object through an upper probe module and a lower probe module that are configured to generate ultrasonic waves toward the target object from above and below the target object, respectively, so as to simultaneously inspect upper and lower portions of the target object.

### Solution to Problem

In order to solve the above-described problem, an ultrasonic inspection apparatus using an upper probe module and a lower probe module of the present disclosure is to inspect a target object by using ultrasonic waves, and includes: a lower probe module that is arranged below the target object and includes a lower transducer configured to generate ultrasonic waves toward the target object or receive ultrasonic waves, from below the target object, and a lower water jacket with an internal space into which one side of the lower transducer is to be inserted, the internal space being filled with liquid; an upper probe module that is arranged above the target object and includes an upper transducer configured to generate ultrasonic waves toward the target object or receive ultrasonic waves, from above the target object, and an upper water jacket with an internal space into which one side of the upper transducer is to be inserted, the internal space being filled with liquid; and a trigger control unit configured to control a time point at which the lower transducer generates ultrasonic waves, and a time point at which the upper transducer generates ultrasonic waves, wherein the liquid, which is a transmission medium for ultrasonic transmission, is sprayed onto the target object from the lower water jacket and the upper water jacket without immersing the target object in the liquid.

In order to solve the above-described problem, in the ultrasonic inspection apparatus using an upper probe module and a lower probe module of the present disclosure, a central axis of the lower transducer of the lower probe module and a central axis of the upper transducer of the upper probe module may be arranged on the same line.

In order to solve the above-described problem, in the ultrasonic inspection apparatus using an upper probe module and a lower probe module of the present disclosure, the lower probe module may further include a first receiving unit configured to receive the ultrasonic waves generated by the upper transducer of the upper probe module, or to receive the ultrasonic waves generated by the lower transducer of the lower probe module, and the upper probe module may further include a second receiving unit configured to receive the ultrasonic waves generated by the lower transducer of the lower probe module, or to receive the ultrasonic waves generated by the upper transducer of the upper probe module.

In order to solve the above-described problem, in the ultrasonic inspection apparatus using an upper probe module and a lower probe module of the present disclosure, the trigger control unit may cause the lower transducer to generate ultrasonic waves, and after a designated time period, cause the upper transducer to generate ultrasonic waves, or to cause the upper transducer to generate ultrasonic waves, and after a designated time period, cause the lower transducer to generate ultrasonic waves.

In order to solve the above-described problem, in the ultrasonic inspection apparatus using an upper probe module and a lower probe module of the present disclosure, the trigger control unit may cause the lower transducer and the upper transducer to alternately generate ultrasonic waves with a designated time interval.

In order to solve the above-described problem, in the ultrasonic inspection apparatus using an upper probe module and a lower probe module of the present disclosure, the lower probe module and the upper probe module may scan the target object while moving along the target object, and the trigger control unit may cause, when the lower probe module and the upper probe module move in a first direction, the lower transducer to generate ultrasonic waves, and cause, when the lower probe module and the upper probe module move in a second direction, the upper transducer to generate ultrasonic waves.

In order to solve the above-described problem, in the ultrasonic inspection apparatus using an upper probe module and a lower probe module of the present disclosure, the first direction and the second direction may be opposite to each other.

In order to solve the above-described problem, in the ultrasonic inspection apparatus using an upper probe module and a lower probe module of the present disclosure, a central axis of the lower transducer of the lower probe module and a central axis of the upper transducer of the upper probe module may not be arranged on the same line.

In order to solve the above-described problem, in the ultrasonic inspection apparatus using an upper probe module and a lower probe module of the present disclosure, the lower probe module may further include a first receiving unit configured to receive the ultrasonic waves generated by the lower transducer of the lower probe module, and the upper probe module may further include a second receiving unit configured to receive the ultrasonic waves generated by the upper transducer of the upper probe module.

In order to solve the above-described problem, in the ultrasonic inspection apparatus using an upper probe module and a lower probe module of the present disclosure, the trigger control unit may cause the lower transducer and the upper transducer to generate ultrasonic waves at the same time.

In order to solve the above-described problem, in the ultrasonic inspection apparatus using an upper probe module and a lower probe module of the present disclosure, the trigger control unit may cause the lower transducer and the upper transducer to alternately generate ultrasonic waves with a designated time interval.

### Advantageous Effects of Invention

The present disclosure relates to an ultrasonic inspection apparatus using an upper probe module and a lower probe module, which has the advantage of being able to inspect a target object through an upper probe module and a lower probe module configured to generate ultrasonic waves toward the target object from above and below the target object, respectively, without inverting or moving the target object.

In addition, the present disclosure has the advantage of being able to inspect upper and lower portions of a target object without inverting and moving the target object, as the inspection is performed from below and above the target object through the upper probe module and the lower probe module, thereby reducing the process time.

In addition, the present disclosure has the advantage of being able to inspect upper and lower portions of a target object without inverting and moving the target object, as the inspection is performed from below and above the target object through the upper probe module and the lower probe module, thereby processing pieces of signal processing data obtained by scanning the upper and lower portions of the target object in conjunction with each other, without a positional alignment tolerance.

### Brief Description of Drawings

FIG. 1 is a diagram illustrating an ultrasonic inspection apparatus using an upper probe module and a lower probe module, according to an embodiment of the present disclosure.
FIG. 2 is a diagram illustrating that a central axis of an upper transducer and a central axis of a lower transducer are arranged on the same line, according to an embodiment of the present disclosure.
FIG. 3 is a diagram illustrating that a central axis of an upper transducer and a central axis of a lower transducer are not arranged on the same line, according to an embodiment of the present disclosure.
FIG. 4 is a diagram illustrating inspecting a target object while moving an upper probe module and a lower probe module, according to an embodiment of the present disclosure.
FIG. 5 is a diagram illustrating that the sum of a time period tᵤₚ required for an upper transducer to generate ultrasonic waves and receive reflected waves, and a time period t_{down} required for a lower transducer to generate ultrasonic waves and receive reflected waves is less than the sum of time periods tₘₒᵥₑ required for the upper transducer and the lower transducer to move from one trigger position to another trigger position, according to an embodiment of the present disclosure.
FIG. 6 is a diagram illustrating a lower probe module and a lower liquid injection unit, according to an embodiment of the present disclosure.
FIG. 7 is a diagram illustrating an upper probe module and an upper liquid injection unit, according to an embodiment of the present disclosure.
FIG. 8 is a diagram illustrating a liquid supply unit, a pump, and a tank that are connected to an upper water jacket and a lower water jacket, according to an embodiment of the present disclosure.
FIG. 9 is a diagram illustrating a liquid supply unit connected to an upper water jacket and a lower water jacket, according to an embodiment of the present disclosure.

### Mode for the Invention

Hereinafter, various embodiments of the present disclosure will be described with reference to the accompanying drawings. Various embodiments of the present disclosure may be variously modified and may have various embodiments, and particular embodiments are illustrated in the drawings and detailed descriptions related to the embodiments are described. However, this is not intended to limit various embodiments of the present disclosure to particular modes of practice, and it is to be appreciated that all changes, equivalents, and/or substitutes that do not depart from the spirit and technical scope of various embodiments of the present disclosure are encompassed in the present disclosure. With regard to the description of the drawings, similar reference numerals are used to refer to similar elements.

As used in various embodiments of the present disclosure, the expressions "include", "may include", and other conjugates refer to the existence of a corresponding disclosed function, operation, or constituent element, and do not limit one or more additional functions, operations, or constituent elements. In addition, as used in various embodiments of the present disclosure, the terms "include", "have", and other conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

It should be understood that, when it is described that an element is "connected" to another element, the first element may be directly connected to the second element, and a third element may be "connected" between the first and second elements. On the other hand, it should be understood that, when it is described that a first element is "directly connected" or "directly coupled" to a second element, no further element is present between the first element and the second element.

The terms used in various embodiments of the present disclosure are used only to describe a particular embodiment, and are not intended to limit the various embodiments of the present disclosure. The singular expression also includes the plural meaning as long as it does not inconsistent with the context.

Unless otherwise defined, all terms, including technical and scientific terms, used herein have the same meaning as commonly understood by those of skill in the art to which the present disclosure pertains based on an understanding of the present disclosure.

Terms, such as those defined in commonly used dictionaries, are to be interpreted as having a meaning that is consistent with their meaning in the context of the relevant art and various embodiments of the present disclosure, and are not to be interpreted in an idealized or overly formal sense unless expressly so defined herein.

The present disclosure relates to an ultrasonic inspection apparatus using an upper probe module and a lower probe module, which capable of inspecting a target object by using the upper probe module and the lower probe module that are configured to generate ultrasonic waves toward the target object from above and below the target object, respectively, so as to simultaneously inspect upper and lower portions of the target object. Hereinafter, preferable embodiments of the present disclosure will be described in detail with reference to the accompanying drawings.

An ultrasonic inspection apparatus using an upper probe module and a lower probe module according to an embodiment of the present disclosure is inspect a target object 10, and may inspect the target object 10 by emitting ultrasonic waves toward the target object 10 and receiving the reflected or transmitted ultrasonic waves by using the probe modules. The target object 10 may be any one of various products that may be subjected to an ultrasonic inspection.

The ultrasonic inspection apparatus using an upper probe module and a lower probe module according to an embodiment of the present disclosure includes a lower probe module 100, an upper probe module 200, and a trigger control unit 160.

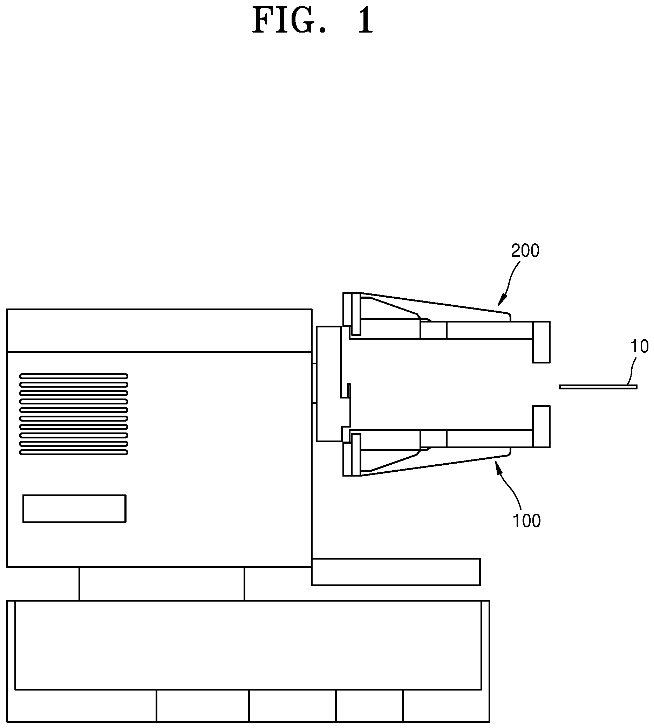

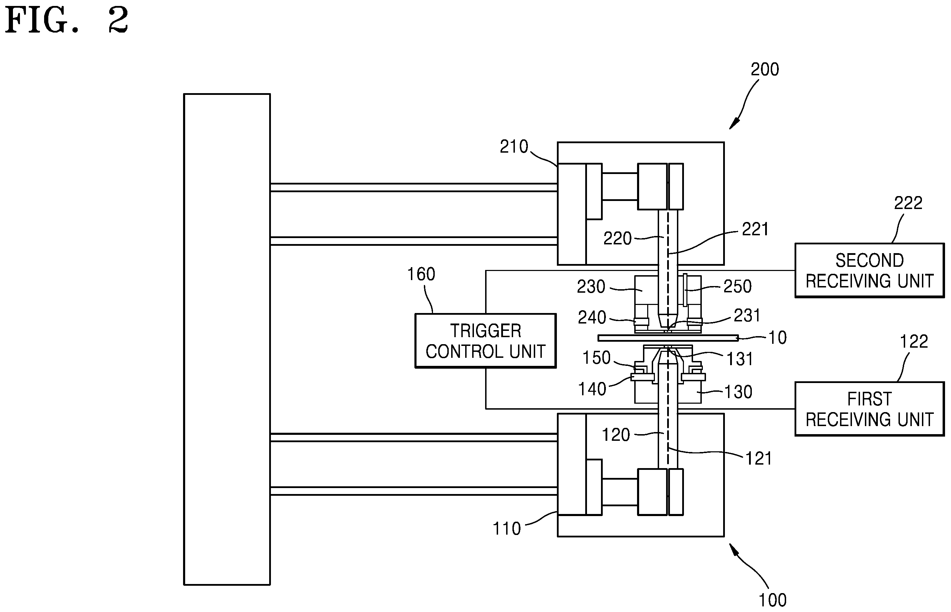

Referring to FIGS. 1 and 2, the lower probe module 100 is arranged below the target object 10 and includes a lower transducer 120 configured to generate ultrasonic waves toward the target object 10 or receive ultrasonic waves, from below the target object 10, and a lower water jacket 130 that has an internal space into which one side of the lower transducer 120 may be inserted, wherein the internal space is filled with liquid.

The upper probe module 200 is arranged above the target object 10 and includes an upper transducer 220 configured to generate ultrasonic waves toward the target object 10 or receive ultrasonic waves, from above the target object 10, and an upper water jacket 230 that has an internal space into which one side of the upper transducer 220 may be inserted, wherein the internal space is filled with liquid.

The ultrasonic inspection apparatus according to an embodiment of the present disclosure is inspect the target object 10 by using ultrasonic waves, and the ultrasonic inspection apparatus according to an embodiment of the present disclosure may simultaneously inspect upper and lower surfaces of the target object 10 through the lower probe module 100 and the upper probe module 200, without inverting or moving the target object 10.

In addition, the ultrasonic inspection apparatus according to an embodiment of the present disclosure may simultaneously inspect the upper and lower surfaces of the target object 10 by spraying liquid, which is a transmission medium for transmitting ultrasonic waves, onto the target object from the lower water jacket 130 and the upper water jacket 230 without immersing the target object in the liquid.

The trigger control unit 160 may control a time point at which the lower transducer 120 generates ultrasonic waves, and a time point at which the upper transducer 220 generates ultrasonic waves.

When the target object 10 is inspected by simultaneously using the lower probe module 100 and the upper probe module 200, interference may occur between ultrasonic waves generated by the lower transducer 120 and the upper transducer 220.

The trigger control unit 160 is to prevent this, and by controlling, through the trigger control unit 160, the time points at which the lower transducer 120 and the upper transducer 220 generate ultrasonic waves, interference between ultrasonic waves generated by the lower transducer 120 and the upper transducer 220 may be prevented.

The ultrasonic inspection apparatus according to an embodiment of the present disclosure may inspect the target object 10 through an ultrasonic reflection (echo) method or an ultrasonic transmission method.

The ultrasonic reflection (echo) method involves generating ultrasonic waves from one side (the upper or lower side) of the target object 10, and receiving the waves reflected from the upper and lower surfaces (or the lower and upper surfaces) of the target object 10. When there is a problem such as a crack inside the target object 10, another reflected wave may be detected between the reflected waves from the upper and lower surfaces (or the lower and upper surfaces) of the target object 10, enabling inspection for defects in the target object 10.

The ultrasonic transmission method involves generating ultrasonic waves from one side (the upper or lower side) of the target object 10, and receiving the ultrasonic waves transmitted through the other side (the lower or upper side) of the target object 10, enabling inspection of the target object 10.

Referring to FIG. 2, according to an embodiment of the present disclosure, a central axis 121 of the lower transducer 120 of the lower probe module 100, and a central axis 221 of the upper transducer 220 of the upper probe module 200 may be arranged on the same line.

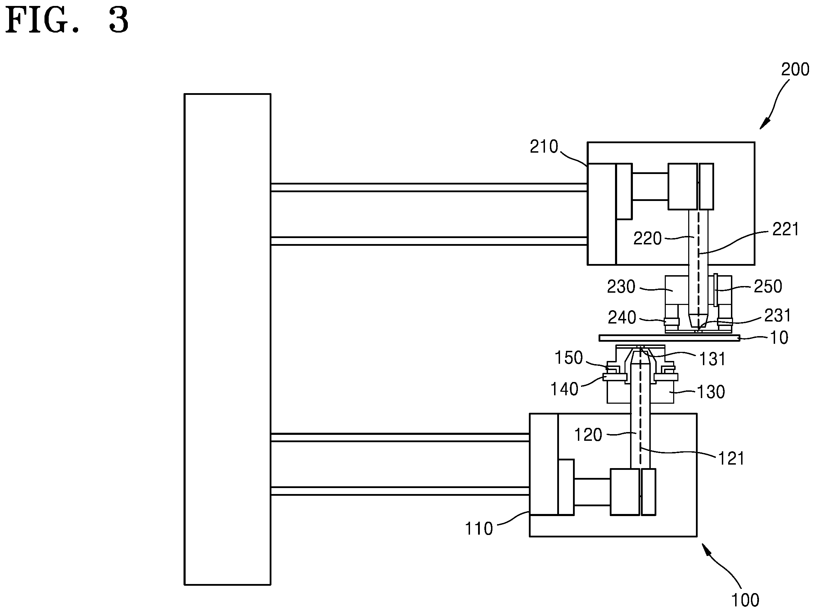

In addition, referring to FIG. 3, according to another embodiment of the present disclosure, the central axis 121 of the lower transducer 120 of the lower probe module 100, and the central axis 221 of the upper transducer 220 of the upper probe module 200 may not be arranged on the same line.

The lower probe module 100 and the upper probe module 200 are movable in the x, y, and z-axis directions. The lower probe module 100 and the upper probe module 200 may move individually in the x, y, and z-axis directions, and the lower probe module 100 and the upper probe module 200 may also move in the x, y, and z-axis directions while being coupled to each other.

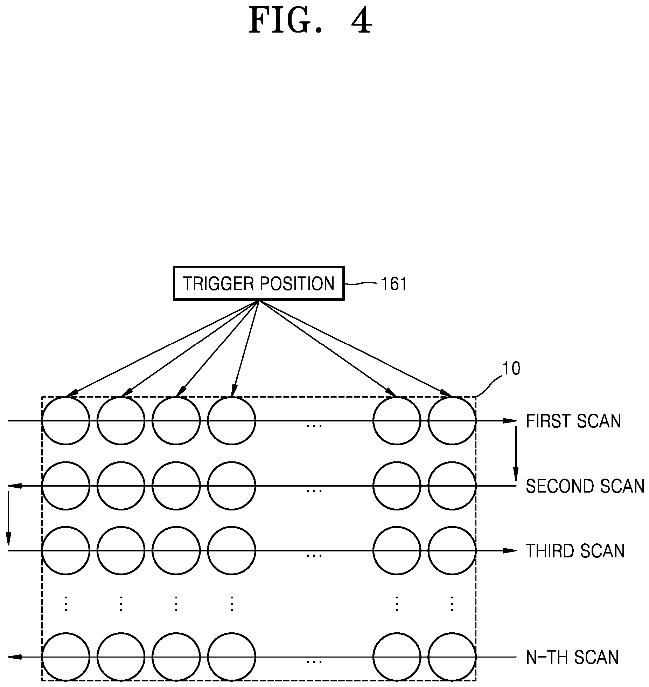

That is, the lower probe module 100 and the upper probe module 200 may move individually, or the lower probe module 100 and the upper probe module 200 may move simultaneously while being coupled to each other. Referring to FIG. 4, the lower probe module 100 and the upper probe module 200 may inspect various points of the target object 10 while moving.

Referring to FIG. 4, a trigger position 161, at which ultrasonic waves are emitted toward the target object 10, may be adjusted through the trigger control unit 160. In detail, by moving the lower probe module 100 and the upper probe module 200 and controlling the time points at which the lower transducer 120 and the upper transducer 220 generate ultrasonic waves through the trigger control unit 160, it is possible to adjust the trigger position 161, at which ultrasonic waves are emitted toward the target object 10.

Referring to FIG. 2, according to an embodiment of the present disclosure, when the central axis 121 of the lower transducer 120 of the lower probe module 100, and the central axis 221 of the upper transducer 220 of the upper probe module 200 are arranged on the same line, both the ultrasonic reflection (echo) method and the ultrasonic transmission method may be used.

In detail, ultrasonic signals generated by the lower transducer 120 of the lower probe module 100 and the upper transducer 220 of the upper probe module 200 and reflected from each layer of the target object 10 may be detected so as to inspect the target object 10 from above and below in a reflection manner.

Here, when ultrasonic signals are generated simultaneously from the lower transducer 120 of the lower probe module 100 and the upper transducer 220 of the upper probe module 200, interference may occur between the ultrasonic signals.

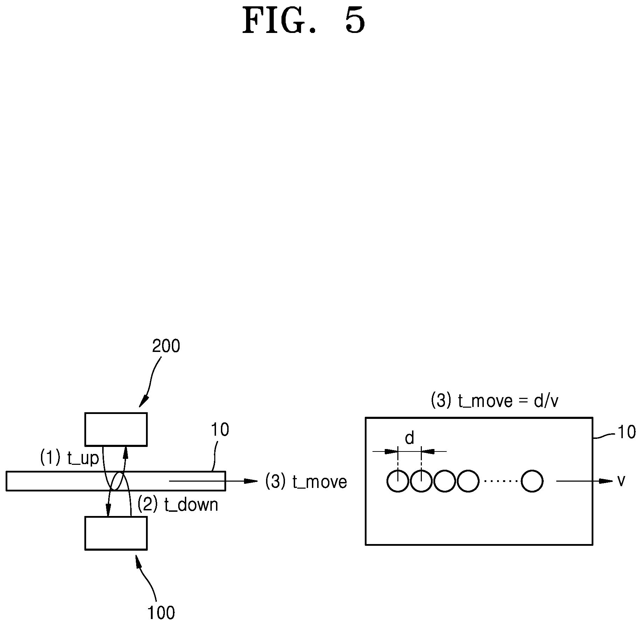

Referring to FIG. 5, to prevent interference between ultrasonic signals generated by the lower transducer 120 and the upper transducer 220, the trigger control unit 160 may cause the lower transducer 120 to generate ultrasonic waves, and after a designated time period, cause the upper transducer 220 to generate ultrasonic waves, or may cause the upper transducer 220 to generate ultrasonic waves, and after a designated time period, cause the lower transducer 120 to generate ultrasonic waves.

Referring to FIG. 5, when performing an inspection by using the upper probe module 200 and the lower probe module 100 at one trigger position 161, the sum of a time period tᵤₚ required for the upper transducer 220 to generate ultrasonic waves and receive reflected waves, and a time period t_{down} required for the lower transducer 120 to generate ultrasonic waves and receive reflected waves may be less than the sum of time periods tₘₒᵥₑ required for the upper transducer 220 and the lower transducer 120 to move from one trigger position 161 to another trigger position 161.

As such, when the sum of the time period tᵤₚ required for the upper transducer 220 to generate ultrasonic waves and receive reflected waves, and the time period t_{down} required for the lower transducer 120 to generate ultrasonic waves and receive reflected waves is less than the sum of the time periods tₘₒᵥₑ required for the upper transducer 220 and the lower transducer 120 to move from one trigger position 161 to another trigger position 161, and by introducing a time interval between the time points at which the upper transducer 220 and the lower transducer 120 generate ultrasonic waves, the target object 10 may be inspected at one trigger position 161 in a reflection manner without interference between the ultrasonic waves.

Here, the time periods tₘₒᵥₑ required for the upper transducer 220 and the lower transducer 120 to move from one trigger position 161 to another trigger position 161 may be derived by considering an interval d between the one trigger position 161 and the other trigger position 161 and a velocity v at which the lower probe module 100 and the upper probe module 200 move.

In the transmission method, ultrasonic signals generated by the lower transducer 120 of the lower probe module 100 and the upper transducer 220 of the upper probe module 200 and transmitted through the target object 10 may be detected so as to inspect the target object 10 from above and below in a transmission manner.

According to an embodiment of the present disclosure, the lower probe module 100 may include a first receiving unit 122 configured to receive ultrasonic waves generated by the upper transducer 220 of the upper probe module 200 or receive ultrasonic waves generated by the lower transducer 120 of the lower probe module 100, and the upper probe module 200 may include a second receiving unit 222 configured to receive ultrasonic waves generated by the lower transducer 120 of the lower probe module 100 or receive ultrasonic waves generated by the upper transducer 220 of the upper probe module 200.

When the central axis 121 of the lower transducer 120 of the lower probe module 100, and the central axis 221 of the upper transducer 220 of the upper probe module 200 are arranged on the same line, ultrasonic signals generated by the lower transducer 120 and then transmitted through each layer of the target object 10 may be received through the second receiving unit 222, so as to inspect the target object 10.

In addition, when the central axis 121 of the lower transducer 120 of the lower probe module 100, and the central axis 221 of the upper transducer 220 of the upper probe module 200 are arranged on the same line, ultrasonic signals generated by the upper transducer 220 and then transmitted through each layer of the target object 10 may be received through the first receiving unit 122, so as to inspect the target object 10.

In the ultrasonic transmission method, it is significantly difficult to align the sound axes of a transmitting unit (transducer) that generates ultrasonic waves and a receiving unit that receives the ultrasonic waves, and precise sound axis alignment of the transmitting unit and the receiving unit is required to accurately inspect the target object 10.

However, as in an embodiment of the present disclosure, when the central axis 121 of the lower transducer 120 of the lower probe module 100, and the central axis 221 of the upper transducer 220 of the upper probe module 200 are arranged on the same line, and the first receiving unit 122 is provided in the lower probe module 100 and the second receiving unit 222 is provided in the upper probe module 200, the sound axis alignment may be optimized by comparing signals for sound axis alignment from above and below the target object 10 to obtain identical ultrasonic signals having the maximum magnitude for the same target object 10.

In addition, as in an embodiment of the present disclosure, when the central axis 121 of the lower transducer 120 of the lower probe module 100, and the central axis 221 of the upper transducer 220 of the upper probe module 200 are arranged on the same line, and the first receiving unit 122 is provided in the lower probe module 100 and the second receiving unit 222 is provided in the upper probe module 200, such that the sound axis alignment is optimized, it is possible to minimize positional errors even when using the reflection method simultaneously from above and below the same target object 10.

According to an embodiment of the present disclosure, the first receiving unit 122 may also receive ultrasonic waves generated by the lower transducer 120 of the lower probe module 100. That is, the first receiving unit 122 may receive ultrasonic waves generated by the upper transducer 220, and may also receive ultrasonic waves that are generated by the lower transducer 120 and return to the lower transducer 120.

In addition, the first receiving unit 122 may be provided inside the lower transducer 120, and may be provided outside the lower transducer 120.

In addition, the first receiving unit 122 may be provided inside the trigger control unit 160, and may be provided outside the trigger control unit 160.

According to an embodiment of the present disclosure, the second receiving unit 222 may also receive ultrasonic waves generated by the upper transducer 220 of the upper probe module 200. That is, the second receiving unit 222 may receive ultrasonic waves generated by the lower transducer 120, and may also receive ultrasonic waves that are generated by the upper transducer 220 and then return to the upper transducer 220.

In addition, the second receiving unit 222 may be provided inside the upper transducer 220, and may be provided outside the upper transducer 220.

In addition, the second receiving unit 222 may be provided inside the trigger control unit 160, and may be provided outside the trigger control unit 160.

According to an embodiment of the present disclosure, the ultrasonic reflection (echo) method and the ultrasonic transmission method may be used in combination. When the central axis 121 of the lower transducer 120 of the lower probe module 100, and the central axis 221 of the upper transducer 220 of the upper probe module 200 are arranged on the same line, and the upper transducer 220 generates ultrasonic signals, the ultrasonic signals reflected from each layer of the target object 10 may be received by the upper transducer 220, and the ultrasonic signals transmitted through the target object 10 may be received by the first receiving unit 122 of the lower probe module 100, such that data for both the reflection method and the transmission method for the target object 10 may be obtained.

In addition, when the lower transducer 120 generates ultrasonic signals, the ultrasonic signals reflected from each layer of the target object 10 may be received by the lower transducer 120, and the ultrasonic signals transmitted through the target object 10 may be received by the second receiving unit 222 of the upper probe module 200, such that data regarding both the reflection method and the transmission method for the target object 10 may be obtained.

According to an embodiment of the present disclosure, the trigger control unit 160 may cause the lower transducer 120 and the upper transducer 220 to alternately generate ultrasonic waves with a designated time interval.

In detail, by causing the lower transducer 120 and the upper transducer 220 to alternately generate ultrasonic waves, the target object 10 may be inspected from above and below the target object 10 in a point-crossing manner.

According to an embodiment of the present disclosure, the lower probe module 100 and the upper probe module 200 scan the target object 10 while moving along the target object 10, and when the lower probe module 100 and the upper probe module 200 move in a first direction, the trigger control unit 160 may cause the lower transducer 120 to generate ultrasonic waves.

In detail, referring to FIG. 5, when the lower probe module 100 and the upper probe module 200 move in a forward direction (the first direction, i.e., the direction of the arrow in FIG. 5), the trigger control unit 160 may cause the lower transducer 120 to generate ultrasonic waves so as to inspect the target object 10.

In addition, when the lower probe module 100 and the upper probe module 200 move in a second direction, the trigger control unit 160 may cause the upper transducer 220 to generate ultrasonic waves.

In detail, referring to FIG. 5, when the lower probe module 100 and the upper probe module 200 move in a reverse direction (the second direction, i.e., the direction opposite to the arrow in FIG. 5), the trigger control unit 160 may cause the upper transducer 220 to generate ultrasonic waves so as to inspect the target object 10.

That is, when the lower probe module 100 and the upper probe module 200 move in the forward direction, the target object 10 may be inspected through the lower transducer 120, and when the lower probe module 100 and the upper probe module 200 move in the reverse direction, the target object 10 may be inspected through the upper transducer 220.

According to an embodiment of the present disclosure, the first direction and the second direction may be opposite to each other. In detail, when the first direction is the forward direction, the second direction may be the reverse direction.

However, the present disclosure not limited thereto, and the first direction may be the reverse direction and the second direction may be the forward direction. That is, when the lower probe module 100 and the upper probe module 200 move in the forward direction (the second direction, i.e., the direction of the arrow in FIG. 5), the target object 10 may be inspected through the upper transducer 220, and when the lower probe module 100 and the upper probe module 200 move in the reverse direction (the first direction, i.e., the direction opposite to the arrow in FIG. 5), the target object 10 may be inspected through the lower transducer 120. In addition, the first direction and the second direction are not limited to being opposite to each other, and the first direction and the second direction may be set to be different from each other.

As described above, the ultrasonic inspection apparatus according to an embodiment of the present disclosure may inspect the target object 10 by causing the lower transducer 120 and the upper transducer 220 to generate ultrasonic waves in a line-crossing manner.

Referring to FIG. 3, according to another embodiment of the present disclosure, the central axis 121 of the lower transducer 120 of the lower probe module 100, and the central axis 221 of the upper transducer 220 of the upper probe module 200 may not be arranged on the same line, and the target object 10 may be inspected through the ultrasonic reflection (echo) method.

Referring to FIG. 3, the central axes of the lower transducer 120 and the upper transducer 220 may not be arranged on the same line, such that ultrasonic signals generated by the lower transducer 120 and the upper transducer 220 do not interfere with each other.

As such, because the central axis 121 of the lower transducer 120 and the central axis 221 of the upper transducer 220 of the upper probe module 200 are not arranged on the same line, the target object 10 may be inspected by causing the lower transducer 120 and the upper transducer 220 to generate ultrasonic waves at the same time.

According to an embodiment of the present disclosure, the lower probe module 100 may including the first receiving unit 122 configured to receive ultrasonic waves generated by the lower transducer 120 of the lower probe module 100, and the upper probe module 200 may including the second receiving unit 222 configured to receive ultrasonic waves generated by the upper transducer 220 of the upper probe module 200.

The first receiving unit 122 may be provided inside the lower transducer 120, and may be provided outside the lower transducer 120. In addition, the first receiving unit 122 may be provided inside the trigger control unit 160, and may be provided outside the trigger control unit 160.

The second receiving unit 222 may be provided inside the upper transducer 220, and may be provided outside the upper transducer 220. In addition, the second receiving unit 222 may be provided inside the trigger control unit 160, and may be provided outside the trigger control unit 160.

The trigger control unit 160 may control a time point at which the lower transducer 120 generates ultrasonic waves, and a time point at which the upper transducer 220 generates ultrasonic waves.

According to an embodiment of the present disclosure, when the central axis 121 of the lower transducer 120 and the central axis 221 of the upper transducer 220 of the upper probe module 200 are not arranged on the same line, the trigger control unit 160 may cause the lower transducer 120 and the upper transducer 220 to generate ultrasonic waves at the same time.

Because the central axis 121 of the lower transducer 120 and the central axis 221 of the upper transducer 220 of the upper probe module 200 are not arranged on the same line, interference may not occur between the ultrasonic waves generated by the lower transducer 120 and the upper transducer 220. Thus, the trigger control unit 160 may cause the lower transducer 120 and the upper transducer 220 to generate ultrasonic waves at the same time so as to inspect the target object 10.

In addition, according to an embodiment of the present disclosure, the trigger control unit 160 may cause the lower transducer 120 and the upper transducer 220 to alternately generate ultrasonic waves with a designated time interval.

In detail, the trigger control unit 160 may cause the lower transducer 120 to generate ultrasonic waves, and after a designated time period, cause the upper transducer 220 to generate ultrasonic waves, or may cause the upper transducer 220 to generate ultrasonic waves, and after a designated time period, cause the lower transducer 120 to generate ultrasonic waves.

The lower probe module 100 of the ultrasonic inspection apparatus using an upper probe module and a lower probe module according to an embodiment of the present disclosure may include a lower housing 110, the lower transducer 120, the lower water jacket 130, and a lower liquid injection unit 140.

The lower housing 110 may be a housing of the lower probe module 100. The lower housing 110 may be provided below the target object 10, the lower transducer 120 may be provided in the lower housing 110, and the lower housing 110 may be connected to a moving device to move in the x, y, and z directions.

According to an embodiment of the present disclosure, by moving the lower housing 110, the lower transducer 120 provided in the lower housing 110 may be moved.

The lower transducer 120 may be provided in the lower housing 110 to generate ultrasonic waves toward the target object 10 or receive ultrasonic waves, from below the target object 10. The lower transducer 120 is a device capable of generating ultrasonic waves, and ultrasonic waves may be emitted from below the target object 10 by using the lower transducer 120.

In addition, ultrasonic waves may be received by using the lower transducer 120. In detail, the lower transducer 120, serving as a receiving unit, may receive ultrasonic waves entering the lower transducer 120.

The lower water jacket 130 has an internal space into which one side of the lower transducer 120 may be inserted, and the internal space of the lower water jacket 130 may be filled with liquid.

A transmission medium is required to transmit ultrasonic waves generated by the lower transducer 120 to the target object 10, and the transmission medium may include liquid. The internal space of the lower water jacket 130 may be filled with the transmission medium including liquid, and the transmission medium may be water. Hereinafter, the description will focus on an example in which the transmission medium is water.

One side of the lower transducer 120 may be arranged in the internal space of the lower water jacket 130. The lower water jacket 130 may be provided with a lower discharge unit 131, and the lower discharge unit 131 may be a through hole formed in the direction from the inside of the lower water jacket 130 toward the target object 10.

According to an embodiment of the present disclosure, an inspection may be performed while spraying liquid, which is a transmission medium for ultrasonic transmission, toward a target object through the lower water jacket 130, without immersing the target object in the liquid. In detail, the liquid may be sprayed through the lower discharge unit 131 of the lower water jacket 130, and ultrasonic waves may be transmitted to the target object 10 as the sprayed liquid acts as a transmission medium.

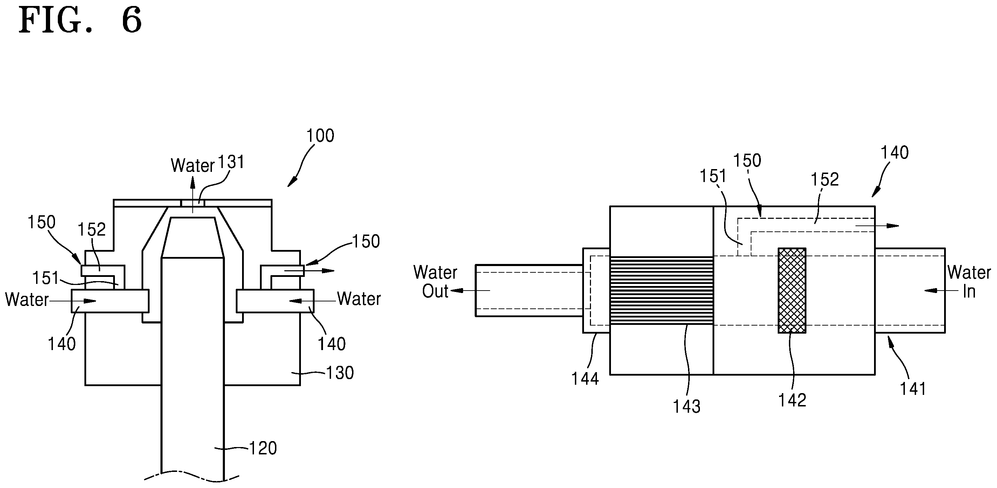

Ultrasonic waves generated by the lower transducer 120 may pass through the lower discharge unit 131 to be emitted toward the target object 10. Referring to FIG. 6, the water filled in the internal space of the lower water jacket 130 is discharged through the lower discharge unit 131 of the lower water jacket 130.

The water may be a transmission medium for transmitting ultrasonic waves, and may be discharged through the lower discharge unit 131, and ultrasonic waves generated by the lower transducer 120 may be emitted toward the target object 10 through the water discharged through the lower discharge unit 131.

The water discharged through the lower discharge unit 131 may be moved to a reservoir provided outside the lower housing 110, and the water moved to the reservoir may be moved to the lower liquid injection unit 140, which will be described below, through a pump or the like.

Referring to FIG. 6, the lower liquid injection unit 140 may inject liquid into the internal space of the lower water jacket 130. The lower liquid injection unit 140 may be connected to a hose or the like extending to the outside, and liquid may move to the lower liquid injection unit 140 through the hose.

The liquid that has moved to the lower liquid injection unit 140 passes through the lower liquid injection unit 140 and moves into the internal space of the lower water jacket 130. Here, the liquid injected into the internal space of the lower water jacket 130 through the lower liquid injection unit 140 may be water.

Referring to FIG. 6, the lower liquid injection unit 140 according to an embodiment of the present disclosure includes a lower nozzle 141 and a lower bubble discharge hole 150.

The lower nozzle 141 may be in communication with the internal space of the lower water jacket 130, and may be a nozzle through which liquid moves. The lower nozzle 141 may be a nozzle provided inside the lower liquid injection unit 140, and water may be injected into the lower water jacket 130 through the lower nozzle 141.

The lower bubble discharge hole 150 is in communication with the lower nozzle 141. In detail, the lower bubble discharge hole 150 may be a hollow tube provided above the lower nozzle 141, and one end of the lower bubble discharge hole 150 may be in communication with the lower nozzle 141.

The lower bubble discharge hole 150 is to remove bubbles from water moving through the lower nozzle 141. The water moving through the lower nozzle 141 is a transmission medium that transmits ultrasonic waves generated by the lower transducer 120, and when bubbles form in water stored in the lower nozzle 141, the bubbles may cause attenuation of ultrasonic waves.

The lower bubble discharge hole 150 is to prevent the attenuation and may be provided above the lower nozzle 141, and bubbles may be removed, through the lower bubble discharge hole 150, from water moving through the lower nozzle 141.

In detail, when bubbles form in water, the bubbles move to the top of the water. Water containing bubbles may be discharged through the lower gas discharge hole 150 provided above the lower nozzle 141, and accordingly, bubbles may be removed from water passing through the lower nozzle 141.

The lower bubble discharge hole 150 includes a first bubble discharge hole 151 and a second bubble discharge hole 152. The first bubble discharge hole 151 is in communication with the lower nozzle 141 and extends upward from the lower nozzle 141, and may extend vertically from an upper portion of the lower nozzle 141.

The second bubble discharge hole 152 is in communication with the first bubble discharge hole 151 and extends from one end of the first bubble discharge hole 151 horizontally or at a downward angle. Water may be discharged from the lower discharge unit 131 of the lower water jacket 130.

Here, in a case in which the lower bubble discharge hole 150 includes only the first bubble discharge hole 151 that extends vertically, there is a risk that water discharged from the lower discharge unit 131 will flow into the lower bubble discharge hole 150. Water flowing into the lower bubble discharge hole 150 makes it difficult to remove, via the lower bubble discharge hole 150, bubbles from water moving through the lower liquid injection unit 140.

To prevent this, the second bubble discharge hole 152 is formed to extend from one end of the first bubble discharge hole 151 horizontally or at a downward angle. As the second bubble discharge hole 152 extends from one end of the first bubble discharge hole 151 horizontally or at a downward angle, it is possible to prevent water discharged from the lower discharge unit 131 from flowing into the lower bubble discharge hole 150.

The lower nozzle 141 may include a lower mesh filter 142. The lower mesh filter 142 may filter out foreign substances contained in water moving through the lower nozzle 141.

The lower nozzle 141 includes a lower fine nozzle unit 143 including a plurality of fine pipes. The lower fine nozzle unit 143 includes a plurality of fine pipes, and water moving through the lower nozzle 141 passes through the lower fine nozzle unit 143.

Here, the plurality of fine pipes provided in the lower fine nozzle unit 143 may extend in the same direction and may extend in a direction parallel to the direction in which the lower nozzle 141 extends.

The lower fine nozzle unit 143 is to form a laminar flow. When water moving through the lower nozzle 141 passes through the lower fine nozzle unit 143, the water moves through the lower fine nozzle unit 143 while forming a laminar flow.

The water flowing into the internal space of the lower water jacket 130 through the lower nozzle 141 may act as a transmission medium that transmits ultrasonic waves generated by the lower transducer 120.

When turbulent flow occurs in the water flowing into the internal space of the lower water jacket 130 through the lower nozzle 141, it may be difficult for the lower transducer 120 to accurately emit ultrasonic waves to a designated position on the target object 10.

The lower fine nozzle unit 143 is to prevent this. Water moving in the lower nozzle 141 through the lower fine nozzle unit 143 may move while forming a laminar flow, and accordingly, ultrasonic waves generated by the lower transducer 120 may be accurately emitted to a designated position on the target object 10.

A lower buffer space 144 having a diameter greater than or equal to the diameter of the lower fine nozzle unit 143 may be provided between the lower fine nozzle unit 143 and a point at which the lower nozzle 141 and the internal space of the lower water jacket 130 are in communication with each other.

In detail, water flowing into the lower nozzle 141 passes through the lower fine nozzle unit 143 including the plurality of fine pipes, then passes through the lower buffer space 144 having no fine pipes, and then flows into the lower water jacket 130.

The lower buffer space 144 may be a space for preventing the mixing of separate streams of water that are forming a laminar flow. When water that has passed through the lower fine nozzle unit 143 flows directly into the lower water jacket 130, streams of water forming a laminar flow may be mixed with each other as the space for water movement expands.

In addition, in a case in which the diameter of the point at which the lower nozzle 141 and the internal space of the lower water jacket 130 are in communication with each other is less than the diameter of the lower fine nozzle unit 143, there is a risk that some of streams of water forming a laminar flow will hit a wall.

The lower buffer space 144 is to prevent this. The water that has passed through the lower fine nozzle unit 143 including the plurality of fine pipes passes through the lower buffer space 144 that has no fine pipes, and then flows into the lower water jacket 130, thereby forming a laminar flow such that streams of water are prevented from mixing with each other.

It has been described above that the lower mesh filter 142, the lower fine nozzle unit 143, and the lower buffer space 144 are provided in the lower bubble discharge hole 150 and the lower liquid injection unit 140 of the lower water jacket 130, but the lower bubble discharge hole 150, the lower mesh filter 142, the lower fine nozzle unit 143, and the lower buffer space 144 may not be provided, if necessary.

The upper probe module 200 of the ultrasonic inspection apparatus using an upper probe module and a lower probe module according to an embodiment of the present disclosure includes an upper housing 210, the upper transducer 220, the upper water jacket 230, and an upper liquid injection unit 240.

The upper housing 210 may be a housing of the upper probe module 200. The upper housing 210 may be provided above the target object 10, the upper transducer 220 may be provided in the upper housing 210, and the upper housing 210 may be connected to a moving device to move in the x, y, and z directions.

According to an embodiment of the present disclosure, by moving the upper housing 210, the upper transducer 220 provided in the upper housing 210 may be moved.

The upper transducer 220 may be provided in the upper housing 210 to generate ultrasonic waves toward the target object 10 or receive ultrasonic waves, from above the target object 10. The upper transducer 220 may generate ultrasonic waves or receive ultrasonic waves. The upper transducer 220 is a device capable of generating ultrasonic waves, and ultrasonic waves may be emitted from above the target object 10 by using the upper transducer 220.

In addition, ultrasonic waves may be received by using the upper transducer 220. In detail, the upper transducer 220, serving as a receiving unit, may receive ultrasonic waves entering the upper transducer 220.

The upper water jacket 230 has an internal space into which one side of the upper transducer 220 may be inserted, and the internal space of the upper water jacket 230 may be filled with liquid.

A transmission medium is required to transmit ultrasonic waves generated by the upper transducer 220 to the target object 10, and the transmission medium may include liquid. The internal space of the upper water jacket 230 may be filled with the transmission medium including liquid, and the transmission medium may be water. Hereinafter, the description will focus on an example in which the transmission medium is water.

One side of the upper transducer 220 may be arranged in the internal space of the upper water jacket 230. The upper water jacket 230 may be provided with an upper discharge unit 231, and the upper discharge unit 231 may be a through hole formed in the direction from the inside of the upper water jacket 230 toward the target object 10.

According to an embodiment of the present disclosure, an inspection may be performed while spraying liquid, which is a transmission medium for ultrasonic transmission, toward a target object through the upper water jacket 230, without immersing the target object in the liquid. In detail, the liquid may be sprayed through the upper discharge unit 231 of the upper water jacket 230, and ultrasonic waves may be transmitted to the target object 10 as the sprayed liquid acts as a transmission medium.

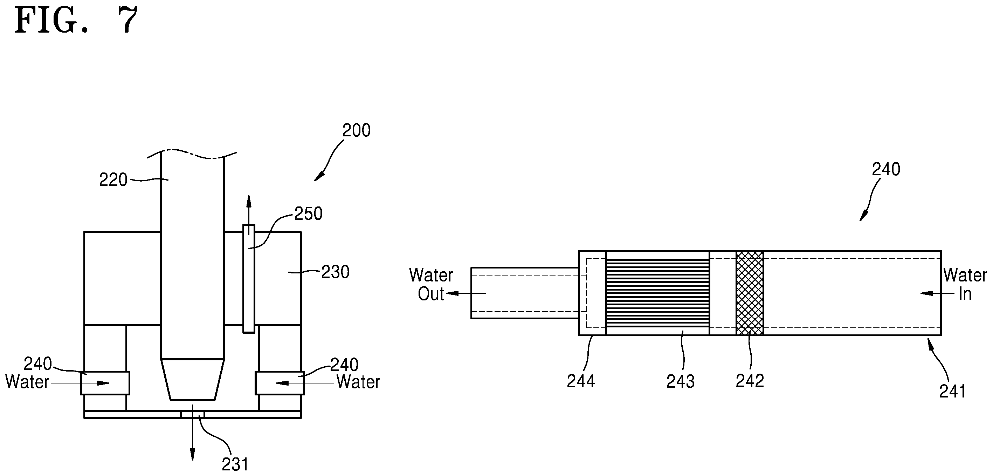

Ultrasonic waves generated by the upper transducer 220 may pass through the upper discharge unit 231 to be emitted toward the target object 10. Referring to FIG. 7, the water filled in the internal space of the upper water jacket 230 is discharged through the upper discharge unit 231 of the upper water jacket 230.

The water may be a transmission medium for transmitting ultrasonic waves, and may be discharged through the upper discharge unit 231, and ultrasonic waves generated by the upper transducer 220 may be emitted toward the target object 10 through the water discharged through the upper discharge unit 231.

The water discharged through the upper discharge unit 231 may be moved to the reservoir provided outside the upper housing 210, and the water moved to the reservoir may be moved to the upper liquid injection unit 240, which will be described below, through a pump or the like.

Referring to FIG. 7, the upper liquid injection unit 240 may inject liquid into the internal space of the upper water jacket 230. The upper liquid injection unit 240 may be connected to a hose or the like extending to the outside, and liquid may move to the upper liquid injection unit 240 through the hose.

The liquid that has moved to the upper liquid injection unit 240 passes through the upper liquid injection unit 240 and moves into the internal space of the upper water jacket 230. Here, the liquid injected into the internal space of the upper water jacket 230 through the upper liquid injection unit 240 may be water.

Referring to FIG. 7, the upper liquid injection unit 240 according to an embodiment of the present disclosure includes an upper nozzle 241 and an upper bubble discharge hole 250.

The upper nozzle 241 may be in communication with the internal space of the upper water jacket 230, and may be a nozzle through which liquid moves. The upper nozzle 241 may be a nozzle provided inside the upper liquid injection unit 240, and water may be injected into the upper water jacket 230 through the upper nozzle 241.

The upper bubble discharge hole 250 is provided in the upper water jacket 230, and extends from the internal space of the upper water jacket 230.

In detail, the upper bubble discharge hole 250 may be a hollow tube provided in an upper portion of the upper water jacket 230, and one end of the upper bubble discharge hole 250 may be in communication with the upper water jacket 230.

The upper bubble discharge hole 250 is to remove bubbles from water stored in the internal space of the upper water jacket 230. The water stored in the upper water jacket 230 is a transmission medium that transmits ultrasonic waves generated by the upper transducer 220, when bubbles form in the water stored in the upper water jacket 230, the bubbles may cause attenuation of ultrasonic waves.

The upper bubble discharge hole 250 is to prevent this, and bubbles in the water stored in the upper water jacket 230 may be removed through the upper bubble discharge hole 250.

In detail, when bubbles form in water, the bubbles move to the top of the water. Water containing bubbles may be discharged through the upper gas discharge hole 250 provided above the upper nozzle 241, and accordingly, bubbles may be removed from water passing through the upper nozzle 241.

The upper bubble discharge hole 250 may be provided in an upper portion of the upper water jacket 230, and water containing bubbles may be removed from water stored in the internal space of the upper water jacket 230 through the upper bubble discharge hole 250. The upper bubble discharge hole 250 may extend vertically from an upper portion of the upper water jacket 230.

In addition, the upper bubble discharge hole 250 may be in communication with the upper nozzle 241. In detail, the upper bubble discharge hole 250 may be a hollow tube provided above the upper nozzle 241, and one end of the upper bubble discharge hole 250 may be in communication with the upper nozzle 241.

The upper bubble discharge hole 250 is to remove bubbles from water moving through the upper nozzle 241. The upper bubble discharge hole 250 may be provided above the upper nozzle 241, and water containing bubbles may be removed, through the upper bubble discharge hole 250, from water moving through the upper nozzle 241. The upper bubble discharge hole 250 may extend vertically from the upper nozzle 241 to be in communication with the outside.

The upper nozzle 241 may include an upper mesh filter 242. The upper mesh filter 242 may filter out foreign substances contained in water moving through the upper nozzle 241.

The upper nozzle 241 includes an upper fine nozzle unit 243 including a plurality of fine pipes. The upper fine nozzle unit 243 includes a plurality of fine pipes, and water moving through the upper nozzle 241 passes through the upper fine nozzle unit 243.

Here, the plurality of fine pipes provided in the upper fine nozzle unit 243 may extend in the same direction and may extend in a direction parallel to the direction in which the upper nozzle 241 extends.

The upper fine nozzle unit 243 is to form a laminar flow. When water moving through the upper nozzle 241 passes through the upper fine nozzle unit 243, the water moves through the upper fine nozzle unit 243 while forming a laminar flow.

The water flowing into the internal space of the upper water jacket 230 through the upper nozzle 241 may be a transmission medium that transmits ultrasonic waves generated by the upper transducer 220.

When turbulent flow occurs in the water flowing into the internal space of the upper water jacket 230 through the upper nozzle 241, it may be difficult for the upper transducer 220 to accurately emit ultrasonic waves to a designated position on the target object 10.

The upper fine nozzle unit 243 is to prevent this. Water moving in the upper nozzle 241 through the upper fine nozzle unit 243 may move while forming a laminar flow, and accordingly, ultrasonic waves generated by the upper transducer 220 may be accurately emitted to a designated position on the target object 10.

An upper buffer space 244 having a diameter greater than or equal to the diameter of the upper fine nozzle unit 243 may be provided between the upper fine nozzle unit 243 and a point at which the upper nozzle 241 and the internal space of the upper water jacket 230 are in communication with each other.

In detail, water flowing into the upper nozzle 241 passes through the upper fine nozzle unit 243 including the plurality of fine pipes, then passes through the upper buffer space 244 having no fine pipes, and then flows into the upper water jacket 230.

The upper buffer space 244 may be a space for preventing the mixing of separate streams of water that are forming a laminar flow. When water that has passed through the upper fine nozzle unit 243 flows directly into the upper water jacket 230, streams of water forming a laminar flow may be mixed with each other as the space for water movement expands.

In addition, in a case in which the diameter of the point at which the upper nozzle 241 and the internal space of the upper water jacket 230 are in communication with each other is less than the diameter of the upper fine nozzle unit 243, there is a risk that some of streams of water forming a laminar flow will hit a wall.

The upper buffer space 244 is to prevent this. The water that has passed through the upper fine nozzle unit 243 including the plurality of fine pipes passes through the upper buffer space 244 that has no fine pipes, and then flows into the upper water jacket 230, thereby forming a laminar flow such that streams of water are prevented from mixing with each other.

It has been described above that the upper mesh filter 242, the upper fine nozzle unit 243, and the upper buffer space 244 are provided in the upper bubble discharge hole 250 and the upper liquid injection unit 240 of the upper water jacket 230, but the upper bubble discharge hole 250, the upper mesh filter 242, the upper fine nozzle unit 243, and the upper buffer space 244 may not be provided, if necessary.

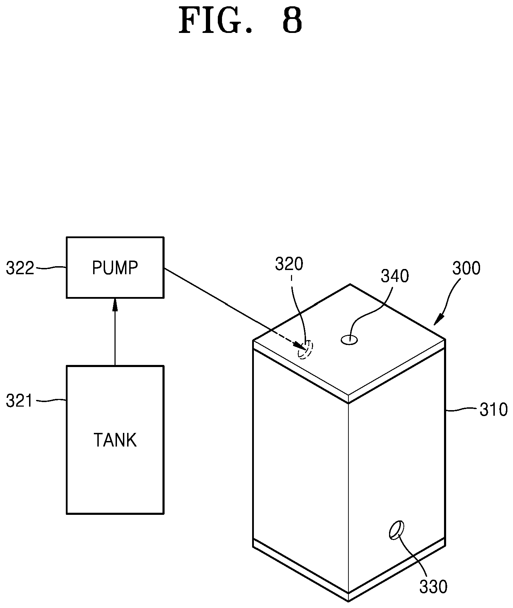

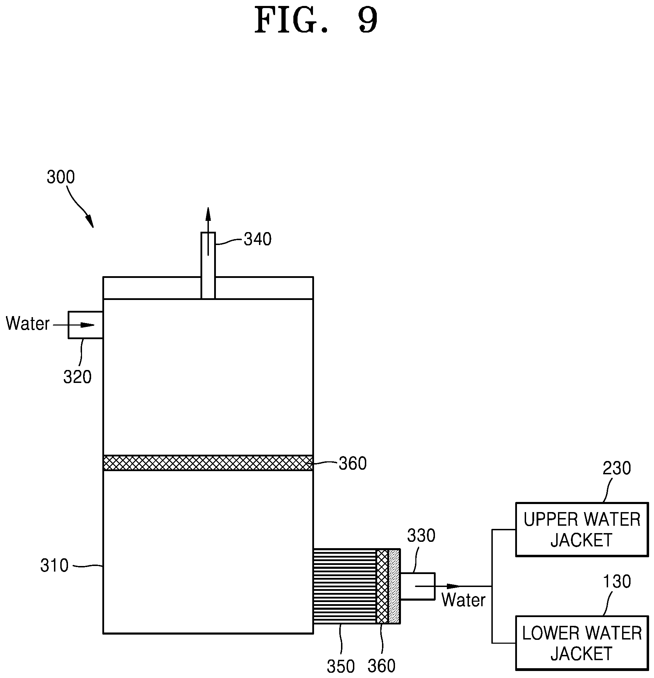

Referring to FIGS. 8 and 9, the ultrasonic inspection apparatus using an upper probe module and a lower probe module according to an embodiment of the present disclosure further includes a liquid supply unit 300.

The liquid supply unit 300 may be connected to the lower liquid injection unit 140 or the upper liquid injection unit 240, and may supply liquid to the lower liquid injection unit 140 or the upper liquid injection unit 240.

The liquid supply unit 300 may be provided the outside of the lower housing 110 and the upper housing 210, and may be connected to the lower liquid injection unit 140 or the upper liquid injection unit 240 through a hose or the like.

The liquid supply unit 300 according to an embodiment of the present disclosure includes a liquid storage tank 310, a liquid injection unit 320, a liquid discharge unit 330, and a bubble discharge hole 340.

Referring to FIGS. 8 and 9, the liquid storage tank 310 has formed therein a space in which liquid may be stored. The liquid injection unit 320 may inject liquid into the liquid storage tank 310, and the liquid may be stored in the liquid storage tank 310 through the liquid injection unit 320.

The liquid discharge unit 330 discharges the liquid from the liquid storage tank 310. The liquid stored in the liquid storage tank 310 may be discharged through the liquid discharge unit 330, and the liquid discharged through the liquid discharge unit 330 may be supplied to the lower liquid injection unit 140 or the upper liquid injection unit 240.

Referring to FIG. 8, the liquid supply unit 300 may be connected to a liquid tank 321 and a liquid pump 322, and liquid may be supplied to the liquid supply unit 300 through the liquid tank 321 and the liquid pump 322.

In detail, the liquid tank 321 and the liquid pump 322 may be connected to the liquid injection unit 320, and water that has passed through the liquid tank 321 and the liquid pump 322 is supplied to the liquid storage tank 310 through the liquid injection unit 320.

The liquid discharge unit 330 may include a fine nozzle unit 350 including a plurality of fine pipes. Referring to FIG. 9, the fine nozzle unit 350 includes a plurality of fine pipes, and liquid moving through the liquid discharge unit 330 passes through the fine nozzle unit 350.

Here, the plurality of fine pipes provided in the fine nozzle unit 350 may extend in the same direction and may extend in a direction parallel to the direction in which the liquid discharge unit 330 extends.

The fine nozzle unit 350 is to form a laminar flow. When water passes through the fine nozzle unit 350 through the liquid discharge unit 330, the water moves through the fine nozzle unit 350 while forming a laminar flow.

However, if necessary, the mesh filters 360 may not be provided in the liquid storage tank 310 and the liquid discharge unit 330, or the mesh filter 360 may be installed in the liquid injection unit 320.

According to an embodiment of the present disclosure, the liquid stored in the liquid storage tank 310 may be water. The bubble discharge hole 340 extends upward from the liquid storage tank 310. In detail, the bubble discharge hole 340 may be a hollow tube provided in an upper portion of the liquid storage tank 310, and one end of the bubble discharge hole 340 may be in communication with the liquid storage tank 310.

The bubble discharge hole 340 is to remove bubbles from water stored in the internal space of the liquid storage tank 310. The water stored in the liquid storage tank 310 is a transmission medium that transmits ultrasonic waves generated by the lower transducer 120 or the upper transducer 220, when bubbles form in the water stored in the liquid storage tank 310, the bubbles may cause attenuation of ultrasonic waves.

The bubble discharge hole 340 is to prevent this, and may remove bubbles from the water before the water is supplied to the lower liquid injection unit 140 or the upper liquid injection unit 240.

In detail, when bubbles form in water, the bubbles move to the top of the water. Water containing bubbles may be discharged through the bubble discharge hole 340 provided in the upper portion of the liquid storage tank 310, and accordingly, the bubbles are removed before the water is supplied to the lower liquid injection unit 140 or the upper liquid injection unit 240.

The bubble discharge hole 340 may be provided in an upper portion of the liquid storage tank 310, and bubbles may be removed from water stored in the internal space of the liquid storage tank 310 through the bubble discharge hole 340. The bubble discharge hole 340 may extend vertically from the upper portion of the liquid storage tank 310.

Referring to FIG. 9, the liquid storage tank 310 and the liquid discharge unit 330 may include the mesh filters 360. The mesh filters 360 may filter out foreign substances contained in the water stored in the liquid storage tank 310, and in water moving through the liquid discharge unit 330.

The ultrasonic inspection apparatus using an upper probe module and a lower probe module according to an embodiment of the present disclosure described above has the following effects.

The ultrasonic inspection apparatus using an upper probe module and a lower probe module according to an embodiment of the present disclosure may inspect a target object through the upper probe module and the lower probe module configured to generate ultrasonic waves toward the target object from above and below the target object, respectively, without inverting or moving the target object.

In addition, the ultrasonic inspection apparatus using an upper probe module and a lower probe module according to an embodiment of the present disclosure may inspect upper and lower portions of a target object without inverting and moving the target object, as the inspection is performed from below and above the target object through the lower probe module and the upper probe module, thereby reducing the process time.

In addition, the ultrasonic inspection apparatus using an upper probe module and a lower probe module according to an embodiment of the present disclosure may inspect upper and lower portions of a target object without inverting and moving the target object, as the inspection is performed from below and above the target object through the lower probe module and the upper probe module, thereby processing pieces of signal processing data obtained by scanning the upper and lower portions of the target object in conjunction with each other, without a positional alignment tolerance.

In addition, in the ultrasonic inspection apparatus using an upper probe module and a lower probe module according to an embodiment of the present disclosure, air bubble discharge holes are formed in the lower probe module and the upper probe module to remove bubbles from water, so as to prevent attenuation of ultrasonic waves due to the bubbles.

The present disclosure is described above in detail with reference to preferred embodiments, but the present disclosure is not limited to the above embodiments, and various modifications may be made without departing from the scope of the present disclosure. Accordingly, the true technical protection scope of the present disclosure should be defined by the technical spirit of the appended claims.

## Claims

1. An ultrasonic inspection apparatus for inspecting a target object by using ultrasonic waves, the ultrasonic inspection apparatus comprising:
a lower probe module that is arranged below the target object and comprises a lower transducer configured to generate ultrasonic waves toward the target object or receive ultrasonic waves, from below the target object, and a lower water jacket with an internal space into which one side of the lower transducer is to be inserted, the internal space being filled with liquid;
an upper probe module that is arranged above the target object and comprises an upper transducer configured to generate ultrasonic waves toward the target object or receive ultrasonic waves, from above the target object, and an upper water jacket with an internal space into which one side of the upper transducer is to be inserted, the internal space being filled with liquid; and
a trigger control unit configured to control a time point at which the lower transducer generates ultrasonic waves, and a time point at which the upper transducer generates ultrasonic waves,
wherein the liquid, which is a transmission medium for ultrasonic transmission, is sprayed onto the target object from the lower water jacket and the upper water jacket without immersing the target object in the liquid.

2. The ultrasonic inspection apparatus of claim 1, wherein a central axis of the lower transducer of the lower probe module and a central axis of the upper transducer of the upper probe module are arranged on a same line.

3. The ultrasonic inspection apparatus of claim 2, wherein the lower probe module further comprises a first receiving unit configured to receive the ultrasonic waves generated by the upper transducer of the upper probe module, or to receive the ultrasonic waves generated by the lower transducer of the lower probe module, and
the upper probe module further comprises a second receiving unit configured to receive the ultrasonic waves generated by the lower transducer of the lower probe module, or to receive the ultrasonic waves generated by the upper transducer of the upper probe module.

4. The ultrasonic inspection apparatus of claim 2, wherein the trigger control unit is further configured to cause the lower transducer to generate ultrasonic waves, and after a designated time period, cause the upper transducer to generate ultrasonic waves, or to cause the upper transducer to generate ultrasonic waves, and after a designated time period, cause the lower transducer to generate ultrasonic waves.

5. The ultrasonic inspection apparatus of claim 2, wherein the trigger control unit is further configured to cause the lower transducer and the upper transducer to alternately generate ultrasonic waves with a designated time interval.

6. The ultrasonic inspection apparatus of claim 2, wherein the lower probe module and the upper probe module are configured to scan the target object while moving along the target object, and
the trigger control unit is further configured to, when the lower probe module and the upper probe module move in a first direction, cause the lower transducer to generate ultrasonic waves, and when the lower probe module and the upper probe module move in a second direction, cause the upper transducer to generate ultrasonic waves.

7. The ultrasonic inspection apparatus of claim 6, wherein the first direction and the second direction are opposite to each other.

8. The ultrasonic inspection apparatus of claim 1, wherein a central axis of the lower transducer of the lower probe module and a central axis of the upper transducer of the upper probe module are not arranged on a same line.

9. The ultrasonic inspection apparatus of claim 8, wherein the lower probe module further comprises a first receiving unit configured to receive the ultrasonic waves generated by the lower transducer of the lower probe module, and
the upper probe module further comprises a second receiving unit configured to receive the ultrasonic waves generated by the upper transducer of the upper probe module.

10. The ultrasonic inspection apparatus of claim 8, wherein the trigger control unit is further configured to cause the lower transducer and the upper transducer to generate ultrasonic waves at the same time.

11. The ultrasonic inspection apparatus of claim 8, wherein the trigger control unit is further configured to cause the lower transducer and the upper transducer to alternately generate ultrasonic waves with a designated time interval.
